# EUROPEAN PATENT APPLICATION

(11) **EP 1 642 691 A2**
(43) Date of publication of application: **05.04.2006**
(21) Application number: 05021159.8
(22) Date of filing: 28.09.2005
(51) Int. Cl.: B25J 9/16

(54) **Robot movement control method**

(30) Priority: 29.09.2004 JP 2004283777
(71) Applicant: FANUC LTD, Minamitsuru-gun, Yamanashi 401-0597 (JP)
(72) Inventor: Nihei, Ryo, Fujiyoshida-shi Yamanashi 403-0005 (JP); Kato, Tetsuaki, Hadano-shi Kanagawa 259-1326 (JP); Tsuchida, Yukinobu, FANUC Manshonharimomi, Minamitsuru-gun Yamanashi 401-0511 (JP); Nagayama, Atsuo FANUC Manshonharimomi, Minamitsuru-gun Yamanashi 401-0511 (JP); Ichinose, Masakazu FANUC Dai3virakaramatsu, Minamitsuru-gun Yamanashi 401-0511 (JP)
(74) Representative: Schmidt, Steffen J.

(57) **Abstract**

A robot movement control method, in which a robot is moved along a smooth path (10, 11) determined based on a teaching path defined to pass a designated starting point (TP4), at least one intermediate point (TP5, TP6) and a terminal point (TP7), is disclosed. The smooth path is determined so that the coincidence between the actual path for robot movement and the teaching path is assured near the starting point (TP4) or the intermediate point.

## Description

### BACKGROUND OF THE INVENTION

### 1. Field of the Invention

The present invention relates to a robot movement control method and, more particularly, to a method of controlling the movement of a robot so that a path of a path-assurance section defined in a smooth path of the robot coincides with a path designated by an operation program. The present invention is advantageously applicable to a robot for use in an application such as the continuous picking of workpieces.

### 2. Description of the Related Art

In the case where a program is executed, in robot control, to move a robot to a predetermined teaching point along a movement axis in one direction and then change the direction to move the robot toward another teaching point along a different movement axis in a different direction, a method is often used in which parts of the operations of the robot along the respective movement axes overlap one other so that the direction is smoothly changed along a curved trajectory. In such a case, an acceleration/deceleration process is executed for individual teaching points in accordance with the ratio of the overlapping operations designated in an operation command of an operation program (hereinafter referred to as a smoothing ratio). Generally, it is advantageous to designate a higher smoothing ratio for saving time required for acceleration/deceleration to reduce a cycle time. Consequently, it is common practice to designate a high smoothing ratio for a teaching point which does not require a high positioning accuracy.

However, in a robot for continuously picking workpieces, for example, if a high smoothing ratio is designated even for a teaching point which does not require a high positioning accuracy, a problem in operation may be caused.

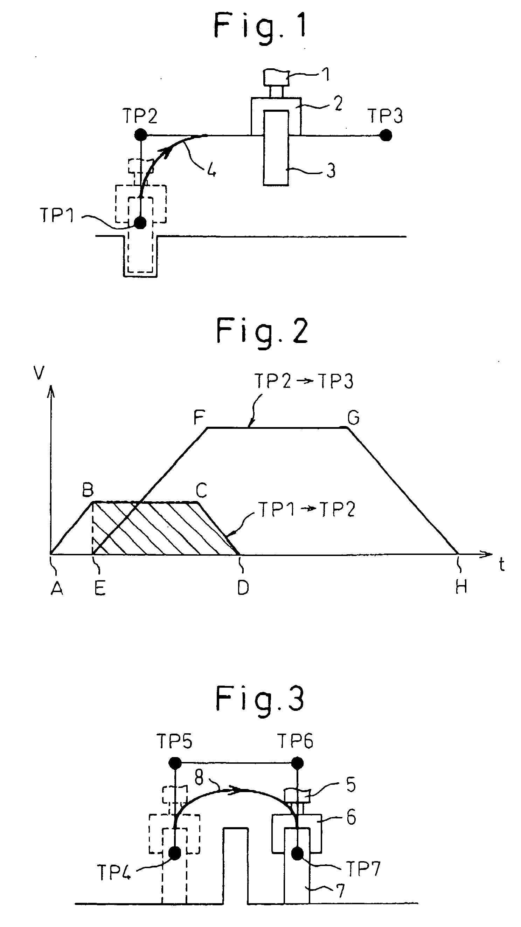

Figs. 1 to 4 are diagrams for illustrating a typical case in which such a problem is caused.

Fig. 1 shows a movement path of a hand 2 attached to a forward end 1 of a robot when a workpiece 3 is gripped by the hand 2, pulled out of a recess and transported. Fig. 2 is a time chart showing a content of a path motion plan in which a high smoothing ratio is designated for a position TP2 in an operating command for movement along the path in Fig. 1, with the abscissa representing time t and the ordinate representing speed v.

In Fig. 1, TP1, TP2 and TP3 designate teaching points for a tool point a position of which is predetermined with respect of the hand 2 of the robot, and an operation type is assumed to be designated such that the robot hand 2 moves linearly in the section from TP1 to TP2 and the section from TP2 to TP3. As the position TP2 is only a transit point where the motion is changed from the vertically upward movement to the horizontal movement, it is advantageous to designate a high smoothing ratio for TP2 in order to reduce the cycle time. However, if a high smoothing ratio is designated for the position TP2, the trajectory accuracy would be deteriorated near the position TP2 which makes up a corner. In other words, as indicated by reference numeral 4, the hand 2 follows a trajectory in which it deviates from the taught straight path near the position TP2 and then moves toward a position TP3.

In this way, when a high smoothing ratio is designated for the position TP2, a path motion plan is prepared so that a motion EFGH for moving along the straight path from TP2 to TP3 is started at the same time that the accelerating operation is completed (point B) in a motion ABCD for moving along the straight path from TP1 to TP2, as shown in Fig. 2. This means that a part (from the point B to the point D) of the motion for linear movement along the preceding teaching path section from TP1 to TP2 overlaps the motion of the linear movement along the succeeding teaching path section from TP2 to TP3.

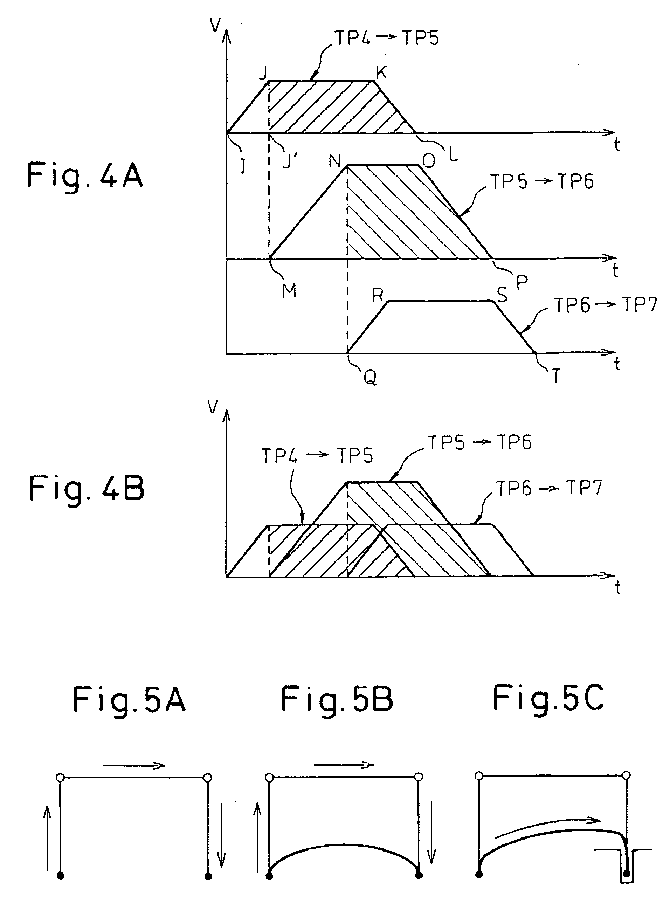

Further, Fig. 3 shows a movement path of both a workpiece and a hand 6 attached to a forward end 5 of a robot when the workpiece 7 is gripped by the hand 6 and is then transported over an obstacle by the upward, horizontal and downward movement. Figs. 4A and 4B are time charts showing a content of a path motion plan in which a high smoothing ratio is designated for positions TP5 and TP6 in operation commands for movement along the path shown in Fig. 3, with the abscissa representing time t and the ordinate representing speed V.

In Fig. 3, TP4, TP5, TP6 and TP7 designate teaching points for a tool point a position of which is predetermined with respect of the hand 6 of the robot, and an operation type is assumed to be designated such that the robot hand 6 moves linearly in the section from TP4 to TP5, the section from TP5 to TP6 and the section from TP6 to TP7. As the position TP5 is only a transit point where the motion is changed from vertically upward movement to horizontal movement, and the position TP6 only a transit point where the motion is changed from horizontal movement to vertically downward movement, it is advantageous to designate a high smoothing ratio for the positions TP5 and TP6 in order to reduce the cycle time. However, if a high smoothing ratio is designated for the positions TP5 and TP6, the trajectory accuracy would be deteriorated near the positions TP5 and TP6 which form corners, respectively. In other words, as indicated by reference numeral 8, the hand 6 follows a trajectory in which it temporarily deviates from the taught straight path from a point before the position TP5 to a point after the position TP6 and then moves toward a position TP7.

In this way, when a high smoothing ratio is designated for the positions TP5 and TP6, a path motion plan is prepared so that a motion MNOP for linear movement along the teaching path from TP5 to TP6 is started at the same time the accelerating operation is completed (point J) in a motion IJKL for linear movement along the teaching path from TP4 to TP5 and so that a motion QRST for linear movement along the teaching path from TP6 to TP7 is started at the same time that completion of the accelerating operation is completed (point N) in a motion MNOP for linear movement along the teaching path from TP5 to TP6, as shown in Fig. 4A. This means that a part of the preceding motion for linear movement along the teaching path from TP4 to TP5 and a part of the motion for linear movement along the teaching path from TP6 to TP7 overlap each other during the motion for linear movement along the teaching path from TP5 to TP6, as shown in Fig. 4B.

If a high smoothing ratio is designated when the teaching path, including an upward movement, a horizontal movement and a downward movement as shown in Fig. 5A, is designated, the hand 6 actually moves along a path as shown in Fig. 5B. However, in the process of inserting a workpiece, the movement path is required to coincide with the teaching path (the vertical path in Fig. 5C) near an insertion target point, as shown in Fig. 5C. In view of this, Japanese Patent No. 3537229 proposes a method of ensuring that a hand moves along the teaching path in a path-assurance section designated near the terminal point of the movement path.

As described above, in the case where the path as shown in Fig. 1 is taught and a high smoothing ratio is designated, the movement path deviates from the straight teaching path connecting TP1 and TP2 near the position TP1 and, therefore, the workpiece may not be pulled out smoothly. Also, in the case where a straight path connecting TP4, TP5, TP6 and TP7 in that order by straight lines is taught and a high smoothing ratio is designated, the hand 6 follows a curved path as indicated by reference numeral 8 in Fig. 3 and, over the whole range of the path from TP5 to TP6, the hand 6 does not reach the taught height. As a result, the hand 6 may interfere with an obstacle during horizontal movement.

Further, the method disclosed in Japanese Patent No. 3537229 assures only the path for the approaching motion but not the path for the leaving motion. Therefore, the motion of pulling out the workpiece may cause a similar problem.

In order to avoid the problems described above, it has been a common practice to carry out the adjustment process based on trial and error including the following measures. In the case of Fig. 1, measures have been taken such as (1) decreasing the command speed for the path section from the position TP1 to the position TP2, (2) designating a low smoothing ratio for the position TP2, or (3) increasing the distance of the position TP2 from the position TP1, while, in the case of Figs. 3 and 5, measures have been taken such as (4) decreasing the command speed for the path sections from TP4 to TP5 and the command speed for the path section from TP6 to TP7, (5) designating a low smoothing ratio for the positions TP5 and TP6, or (6) increasing the distance of the positions TP5 and TP6 from the positions TP4 and TP7, respectively.

### SUMMARY OF THE INVENTION

Accordingly, an object of the present invention is to reduce the work load for adjusting the contents of the teaching by trial and error to obtain the desired motion path and to avoid the unnecessary increase of the cycle time due to the adjustment process based on trial and error, in order to obviate the problem of the prior art described above.

According to one aspect of the present invention, there is provided a robot movement control method in which a robot is smoothly transferred from movement in a preceding path section to movement in a succeeding path section without an abrupt direction change by starting a motion for moving the robot along a teaching path for the succeeding path section before completion of a motion for moving the robot along a teaching path for the preceding path section so as to carry out the motion for movement along the teaching path in the preceding path section and the motion for movement along the teaching path in the succeeding path section with an overlap, the method comprising the steps of: determining a motion for moving the robot along a teaching path from a designated starting point to a designated terminal point with respect to each of two continuous path sections including a preceding path section and a succeeding path section; designating a path-assurance section from the designated starting point to a designated route point on the teaching path for the preceding path section; preparing a path motion plan so that, after the robot is moved along the teaching path for the preceding path section in the path-assurance section and reaches the route point, the motion for moving the robot along the teaching path for the succeeding path section is started with an overlap on the motion for moving the robot along the teaching path for the preceding path section; and moving the robot from the starting point of the preceding path section to the terminal point of the succeeding path section in accordance with the prepared path motion plan.

According to another aspect of the present invention, there is provided a robot movement control method in which a robot is smoothly transferred from movement in a preceding path section to movement in a succeeding path section without an abrupt direction change by starting a motion for moving the robot along a teaching path for the succeeding path section before completion of a motion for moving the robot along a teaching path for the preceding path section so as to carry out the motion for movement along the teaching path in the preceding path section and the motion for movement along the teaching path in the succeeding path section with an overlap, the method comprising the steps of: determining a motion for moving the robot along the teaching path from a designated starting point to a designated terminal point with respect to each of three continuous path sections including a first path section, a second path section following the first path section and a third path section following the second path section; designating a path-assurance section from a first intermediate point to a second intermediate point on the teaching path for the second path section; preparing a path motion plan so that the motion for moving the robot along the teaching path for the first path section is completed before the robot reaches the first intermediate point and so that, after the robot is moved along the teaching path for the second path section in the path-assurance section and reaches the second intermediate point, the motion for moving the robot along the teaching path for the third path section is started with overlap on the motion for moving the robot along the teaching path for the second path section; and moving the robot from the starting point of the first path section to the terminal point of the third path section in accordance with the prepared path motion plan.

The path-assurance section can be designated in the terms of (1) a spatial length of the path-assurance section, (2) a ratio of the path-assurance section to the teaching path for the path section including the path-assurance section, or (3) the time required for the robot to move through the path-assurance section.

By determining the path-assurance section in this way, the coincidence between the movement path of the and the teaching path can be assured in the path-assurance section. Thus, the workpiece can be assuredly pulled out and can assuredly avoid an obstacle existing midway in the movement path. Therefore, the present invention is applicable especially effectively to a continuous picking operation. Further, the motion for movement in the path section preceding to the path section including the path-assurance section is completed before the movement in the path-assurance section, while the motion for movement in the path section following the path section including the path-assurance section is not started before completion of movement in the path-assurance section. Therefore, the robot can move along the teaching path for the path section including the path-assurance section without being affected by the motion for the preceding or succeeding path section.

According to the present invention, the effect of the motion for the preceding or succeeding path section can be eliminated in the section from the starting point to a route point in the desired movement section or the section near an intermediate point and, by designating a section desired to coincident with the teaching path in advance in the program, etc., as a path-assurance section, the job load for adjusting the contents of the teaching based on trial and error in the prior art can be reduced while avoiding the unnecessary increase of the cycle time.

### BRIEF DESCRIPTION OF THE DRAWINGS

The above and other objects, features and advantages of the present invention will be described in more detail below based on the preferred embodiments of the present invention with reference to the accompanying drawings, in which:
Fig. 1 is a diagram showing an example of a movement path of a hand attached to a forward end of a robot;
Fig. 2 is a time chart showing a content of a path motion plan prepared for the movement path shown in Fig. 1;
Fig. 3 is a diagram showing another example of a movement path of the hand attached to the forward end of the robot;
Figs. 4A and 4B are time charts showing a content of a path motion plan prepared for the movement path shown in Fig. 3;
Figs. 5A to 5C are diagrams showing further example of a movement path of the hand attached to the forward end of the robot;

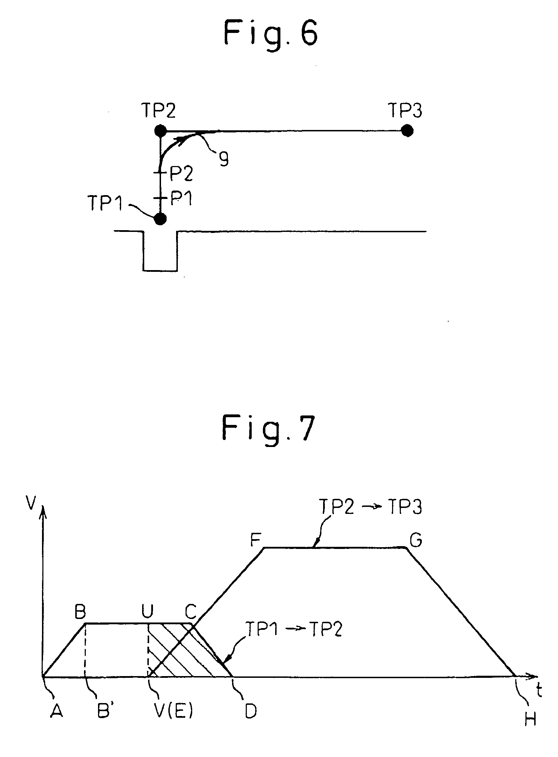

Fig. 6 is a diagram showing a case in which a path-assurance section for assuring the coincidence between the path for leaving the position TP1 and the corresponding teaching path is defined in the movement path shown in Fig. 1;
Fig. 7 is a time chart showing a content of a path motion plan prepared for the movement path shown in Fig. 6;

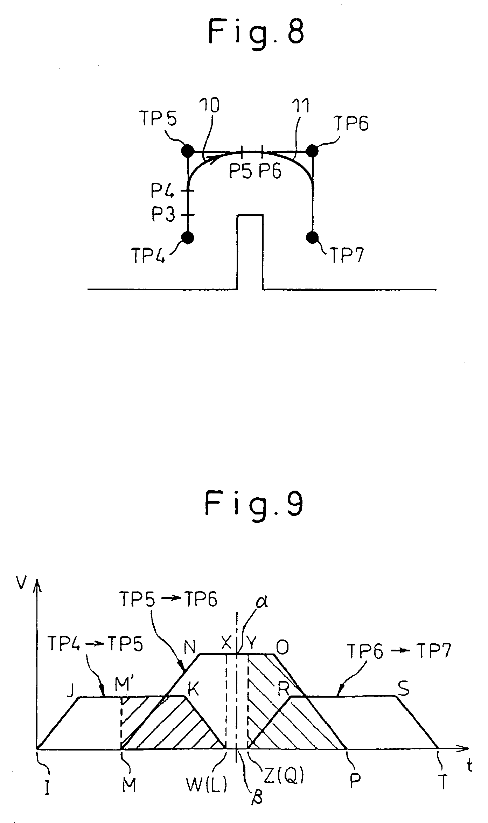

Fig. 8 is a diagram showing a case in which a path-assurance section for assuring the coincidence between the path for approaching the position TP6 and the corresponding teaching path is defined in the movement path shown in Fig. 3;
Fig. 9 is a time chart showing a content of a path motion plan prepared for the movement path shown in Fig. 8;

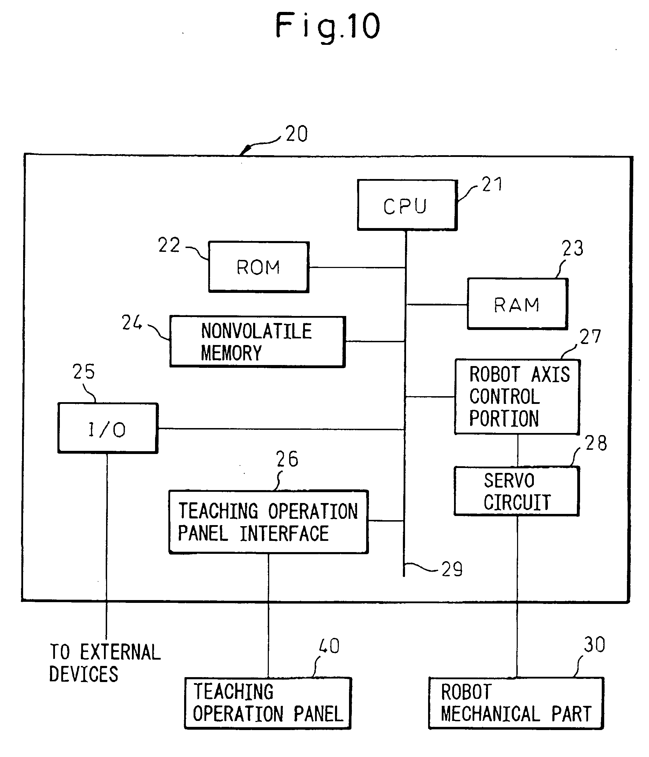

Fig. 10 is a block diagram showing a robot control unit for use in carrying out the method of the present invention;

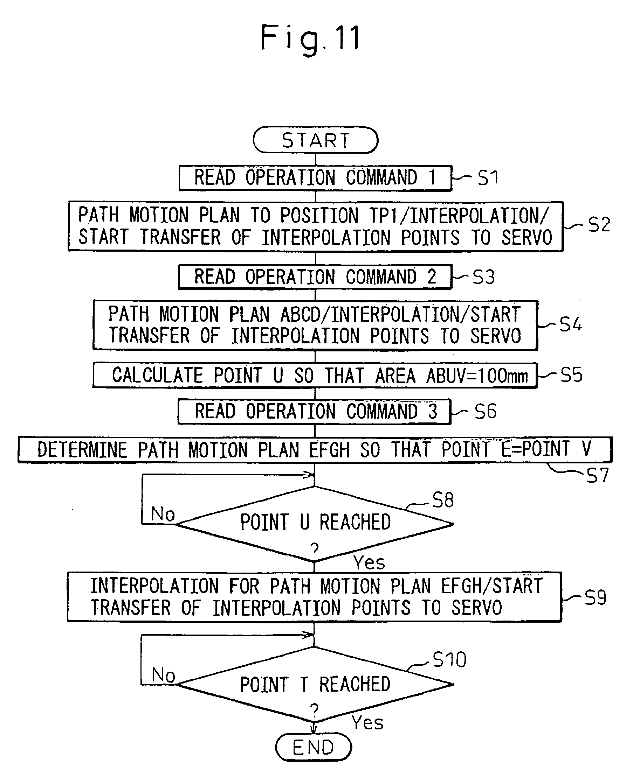

Fig. 11 is a flowchart showing a content of a process executed in accordance with a first embodiment of an operation program for defining the path-assurance section shown in Fig. 6;

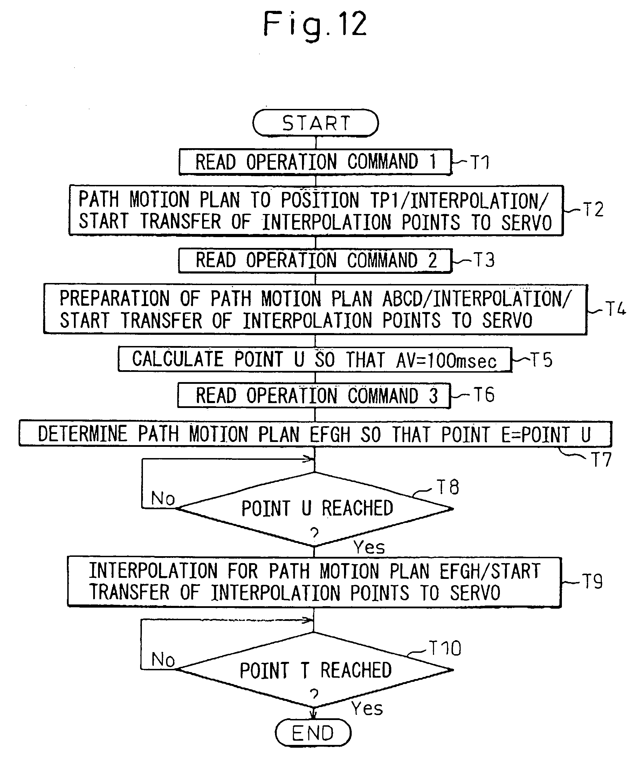

Fig. 12 is a flowchart showing a content of a process executed in accordance with a second embodiment of an operation program for defining the path-assurance section shown in Fig. 6;

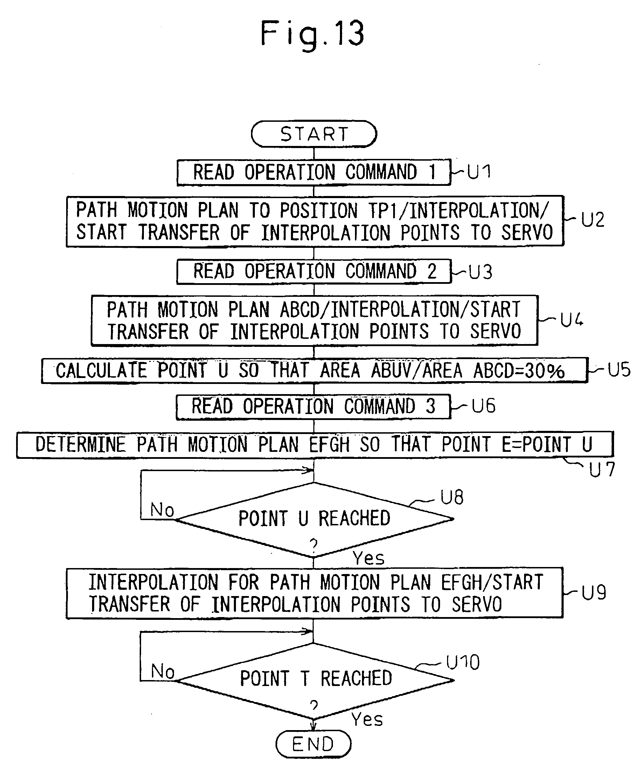

Fig. 13 is a flowchart showing a content of a process executed in accordance with a third embodiment of an operation program for defining the path-assurance section shown in Fig. 6;

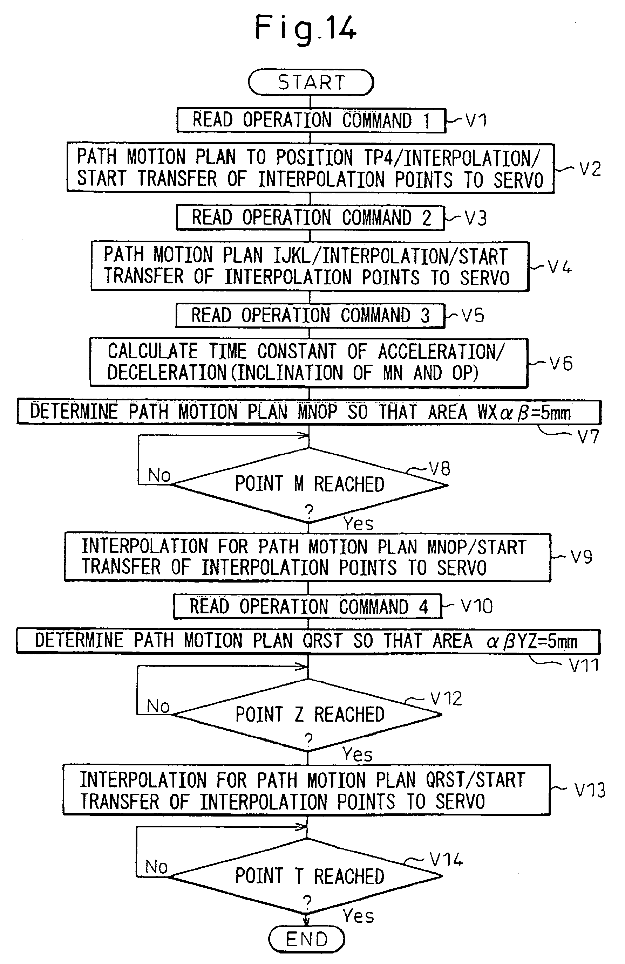

Fig. 14 is a flowchart showing a content of a process executed in accordance with a first embodiment of an operation program for defining the path-assurance section shown in Fig. 8;

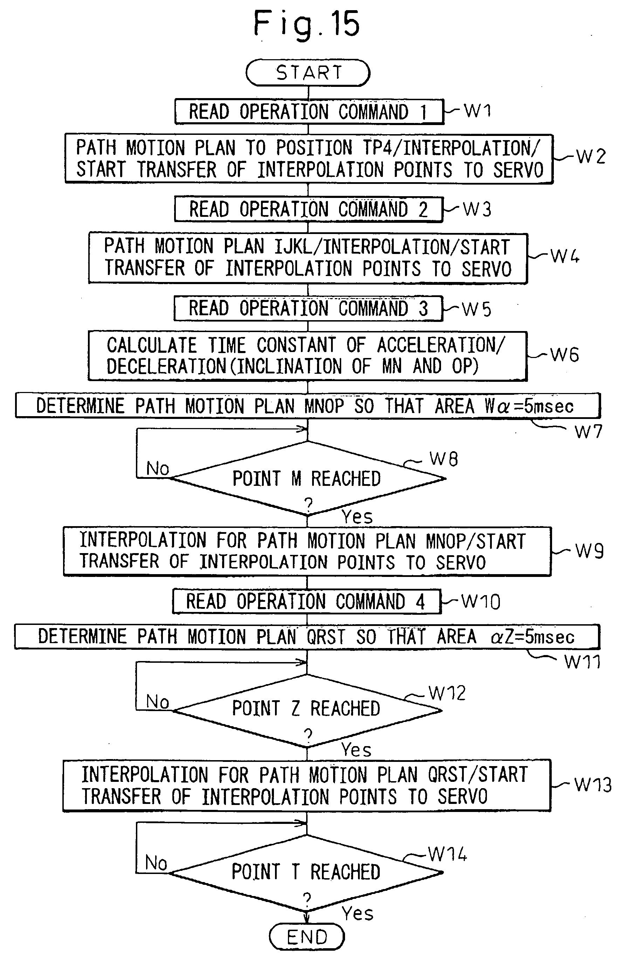

Fig. 15 is a flowchart showing a content of a process executed in accordance with a second embodiment of an operation program for defining the path-assurance section shown in Fig. 8; and

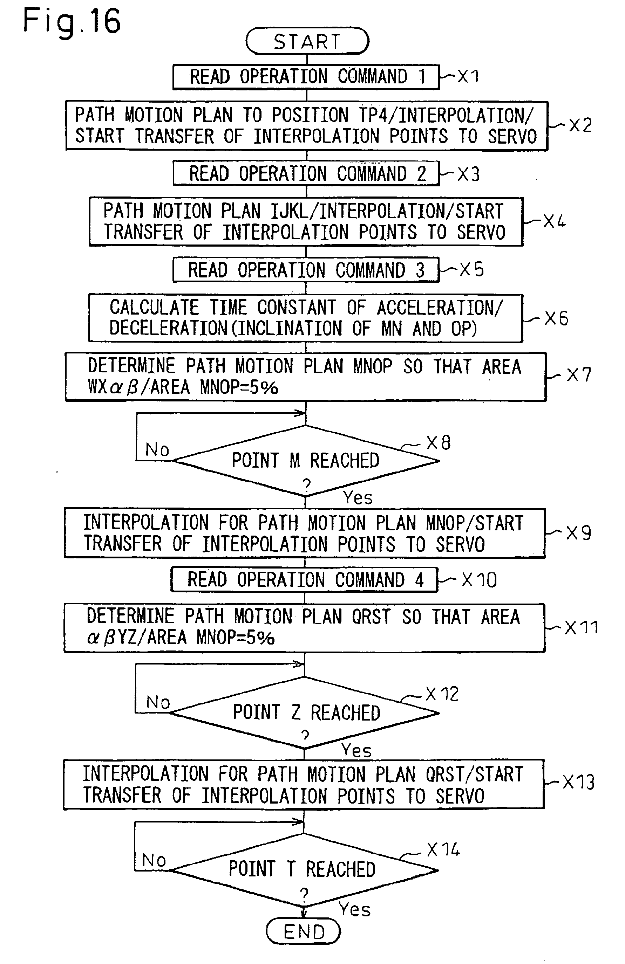

Fig. 16 is a flowchart showing a content of a process executed in accordance with a third embodiment of an operation program for defining the path-assurance section shown in Fig. 8.

### DETAILED DESCRIPTION

Embodiments of the present invention will be described below with reference to the drawings.

Fig. 10 is a block diagram showing a robot control unit for use in carrying out the method of the present invention. A robot control unit 20 includes a central processing unit (hereinafter referred to as the CPU) 21. The CPU 21 is connected, through a bus 29, with a memory 22 in the form of a read only memory (ROM), a memory 23 in the form of a random access memory (RAM), a nonvolatile memory 24, an input/output unit 25 for external devices, an interface 26 for a teaching operation panel 49, and a robot axis control portion 27.

The ROM 22 stores a program for controlling the whole system including the robot control unit 20. The RAM 23 is used to temporarily store data for the processing executed by the CPU 21. The nonvolatile memory 24 stores robot operation program data including the operation commands described later and various set values related to the operation of the individual parts of the system. The robot control portion 27 controls the operation of the individual axes of a robot mechanical part 30 through a servo circuit 28.

The configuration and function of the above robot control unit are basically identical with those of the ordinary robot control unit. The characteristic feature of the present invention is exhibited when the operation program including the following operation commands is stored in the nonvolatile memory 24 and the playback operation is performed in accordance with the stored operation program.

With respect to an assumed movement path similar to the movement path shown in Fig. 1, an example of the operation commands to be written in the operation program in order to carry out the method of the present invention and an outline of the processing executed by the CPU 21 will be described with reference to Figs. 6, 7 and 11 to 13. Fig. 6 extracts the movement path (TP1 → TP2 → TP3) in the case shown in Fig. 1, and shows the movement path including a path-assurance section in which the coincidence between the path of the hand for leaving the position TP1 and the teaching path is assured, with the robot arm, etc. omitted. In this case, citing three examples of the operation command statement prepared so as to assure the path for movement from the position TP1 in the movement path, the process in the playback operation and the realized path for the robot hand path will be described.

In the first to third examples shown below, the path-assurance sections are designated in terms of (1) an absolute value of distance, (2) movement time, and (3) achievement ratio of movement along the teaching path, respectively.

### [First example of operation command statement]

1: straight position [TP1] 2000 mm/sec positioning
2: straight position [TP2] 2000 mm/sec start path assurance 100 mm
3: straight position [TP3] 2000 mm/sec positioning

An outline of the process executed in the playback operation of the operation program containing these operation command statements is shown in the flowchart of Fig. 11. First, the operation command 1 is read at step S1. In accordance with the ordinary method, a path motion plan for linearly moving the robot hand at the command speed of 2000 mm/sec to position it at the position TP1 is prepared. Based on the prepared path motion plan, interpolation points are prepared by the interpolation function, and the prepared interpolation points are transferred to the servo circuit 28 for every processing cycle, thereby moving the robot hand to the position TP1 (step S2).

At the next step S3, the operation command 2 is read. Then, a path motion plan for moving from the position TP1 to the position TP2 is determined, an interpolation process is executed based on the determined path motion plan (ABCD), and the preparation of interpolation points for individual axes and the transfer of the prepared interpolation points to the servo circuit 28 are started (step S4). The robot hand completes the acceleration at the point B, and the position on the path corresponding to the point B is given as P1. In this case, the position P1 is assumed to be located between the position TP1 and the position TP2, and the distance between TP1 and P1 corresponds to the area of the portion surrounded by the points ABB' in Fig. 7. The operation command 2 designates the path-assurance section of 100 mm from position TP1 and, therefore, a point U (point V) is calculated such that the area of the portion surrounded by the points ABUV in the time chart of Fig. 7 is 100 mm (step S5). When the process for the motion for moving from the position TP2 to the position TP3 is allowed to start, the operation command 3 is read (step S6) and a path motion plan (EFGH) for the path from the position TP2 to the position TP3 is prepared in accordance with the ordinary method. In the process, the path motion plan is determined assuming that the point E and the point U (V) coincide with each other (step S7).

When the point U (point V) in the time chart of Fig. 7 is reached (or in the immediately preceding processing cycle), an interpolation process is executed based on the determined path motion plan (EFGH), and the preparation of interpolation points for individual axes and the transfer of the prepared interpolation points to the servo circuit 28 are started (steps S8 and S9). Then, the movement path of the robot hand starts to deviate from the straight teaching path extending from TP1 to TP2, and the robot hand moves along a curved path indicated by numeral 9. When a position on the path where the robot hand starts to deviate from the teaching path is given as P1, the position P2 is assumed to be located 100 mm distant from the position TP1 on the extension of the straight line connecting the positions TP1 and the position P1. Thereafter, when the robot hand completes the motion for moving along the path from the position TP2 to the position TP3 and reaches the terminal point TP3 (step S10), the process is completed. In this way, the movement of the robot hand is achieved to realize the path assurance designated by the operation command 2 in the first example of the operation command statement.

### [Second example of operation command statement]

1: straight position [TP1] 2000 mm/sec positioning
2: straight position [TP2] 2000 mm/sec start path assurance 100 msec
3: straight position [TP3] 2000 mm/sec positioning

An outline of the process executed in the playback operation of the operation program containing these operation command statements is shown in the flowchart of Fig. 12. First, the operation command 1 is read at step T1. In accordance with the ordinary method, a path motion plan for linearly moving the robot hand at the command speed of 2000 mm/sec to position it at the position TP1 is prepared. Based on the prepared path motion plan, interpolation points are prepared by the interpolation function, and the prepared interpolation points are transferred to the servo circuit 28 for every processing cycle, thereby moving the robot hand to the position TP1 (step T2).

At the next step T3, the operation command 2 is read. Then, a path motion plan for moving from the position TP1 to the position TP2 is determined, the interpolation process is executed based on the determined path motion plan (ABCD), and the preparation of interpolation points for individual axes and the transfer of the prepared interpolation points to the servo circuit 28 are started (step T4). The robot hand completes the acceleration at the point B, and the position on the path corresponding to the point B is given as P1, as in the first example of the operation command statement. In this case, the position P1 is assumed to be located between the position TP1 and the position TP2, and the distance between TP1 and P1 corresponds to the area of the portion surrounded by the points ABB' in Fig. 7. The operation command 2 designates the path-assurance section of 100 msec from the position TP1 and, therefore, a point V is calculated such that the time represented by the length between A and V in the time chart of Fig. 7 is 100 msec (step T5). When the process for the motion for moving from the position TP2 to the position TP3 is allowed to start, the operation command 3 is read (step T6) and a path motion plan (EFGH) for the path from the position TP2 to the position TP3 is prepared in accordance with the ordinary method. In the process, the path motion plan is determined assuming that the point E and the point V coincide with each other (step T7).

When the point U (point V) in the time chart of Fig. 7 is reached (or in the immediately preceding processing cycle), an interpolation process is executed based on the determined path motion plan (EFGH), and the preparation of interpolation points for individual axes and the transfer of the prepared interpolation points to the servo circuit 28 are started (steps T8 and T9). Then, the movement path of the robot hand starts to deviate from the straight teaching path extending from TP1 to TP2, and the robot hand moves along a curved path indicated by numeral 9. When a position on the path where the robot hand starts to deviate from the teaching path is given as P2, the position P2 is assumed to be located on the extension of the straight line connecting the position TP1 and the position P1, and the distance from the position TP1 to the position P2 corresponds to the area of the portion surrounded by the points ABUV in Fig. 7. Thereafter, when the robot hand completes the motion for moving along the path from the position TP2 to the position TP3 and reaches the terminal point TP3 (step T10), the process is completed. In this way, the movement of the robot hand is achieved to realize the path assurance designated by the operation command 2 in the second example of the operation command statement.

### [Third example of operation command statement]

1: straight position [TP1] 2000 mm/sec positioning
2: straight position [TP2] 2000 mm/sec start path assurance 30%
3: straight position [TP3] 2000 mm/sec, positioning

An outline of the process executed in the playback operation of the operation program containing these operation command statements is shown in the flowchart of Fig. 13. First, the operation command 1 is read at step U1. In accordance with the ordinary method, a path motion plan for linearly moving the robot hand at the command speed of 2000 mm/sec to position it at the position TP1 is prepared. Based on the prepared path motion plan, interpolation points are prepared by the interpolation function, and the prepared interpolation points are transferred to the servo circuit 28 for every processing cycle, thereby moving the robot hand to the position TP1 (step U2).

At the next step U3, the operation command 2 is read. Then, a path motion plan for moving from the position TP1 to the position TP2 is determined, the interpolation process is executed based on the determined path motion plan (ABCD), and the preparation of interpolation points for individual axes and the transfer of the prepared interpolation points to the servo circuit 28 are started (step U4). The robot hand completes the acceleration at time point B, and the position on the path corresponding to the point B is given as P1, as in the first example of the operation command statement. In this case, the position P1 is assumed to be located between the position TP1 and the position TP2, and the distance between TP1 and P1 corresponds to the area of the portion surrounded by the points ABB' in Fig. 7. The operation command 2 designates the path-assurance section covering 30 % of the distance from the position TP1 to the position TP2 and, therefore, a point U is calculated such that the area of the portion surrounded by the points ABUV in the time chart of Fig. 7 corresponds to 30 % of the area of the portion surrounded by the points ABCD (step U5). When the process for the motion for moving from the position TP2 to the position TP3 is allowed to start, the operation command 3 is read (step U6) and a path motion plan (EFGH) for the path from the position TP2 to the position TP3 is prepared in accordance with the ordinary method. In the process, the path motion plan is determined assuming that the point E and the point V coincide with each other (step U7).

When the point U (point V) in the time chart of Fig. 7 is reached (or in the immediately preceding processing cycle), an interpolation process is executed based on the determined path motion plan (EFGH), and the preparation of interpolation points for individual axes and the transfer of the prepared interpolation points to the servo circuit 28 are started (steps U8 and U9). Then, the movement path of the robot hand starts to deviate from the straight teaching path extending from TP1 to TP2, and the robot hand moves along a curved path indicated by numeral 9. When a position on the path where the robot hand starts to deviate from the teaching path is given as P2, the position P2 is assumed to be located on the extension of the straight line connecting the position TP1 and the position P1, and the distance from the position TP1 to the position P2 corresponds to the area of the portion surrounded by the points ABUV in Fig. 7. Thereafter, when the robot hand completes the motion for moving along the path from the position TP2 to the position TP3 and reaches the terminal point TP3 (step U10), the process is completed. In this way, the movement of the robot hand is achieved to realize the path assurance designated by the operation command 2 in the third example of the operation command statement.

Next, with respect to an assumed movement path similar to the movement path shown in Fig. 13, an example of the operation command to be written in the operation program in order to carry out the method of the present invention and an outline of the processing executed by the CPU 21 will be described with reference to Figs. 8, 9 and 14 to 16. Fig. 8 extracts the movement path (TP4 → TF5 → TF6 → TP7) in the case shown in Fig. 3, and shows the movement path including a path-assurance section in which the coincidence between the path for approaching to the position TP6 and the teaching path is assured, with the robot arm, etc. omitted. In this case, citing three examples of the operation command statement prepared so as to assure the path for an intermediate point in the movement path from TP5 to TP6, the process in the playback operation and the realized path for the robot hand will be described.

In the fourth to sixth examples shown below, the path-assurance sections are designated in terms of (1) an absolute value of distance, (2) movement time, and (3) achievement ratio of movement along the teaching path, respectively.

### [Fourth example of operation command statement]

1: straight position [TP4] 2000 mm/sec positioning
2: straight position [TP5] 2000 mm/sec 100% smooth
3: straight position [TP6] 2000 mm/sec path assurance center 10 mm
4: straight position [TP7] 2000 mm/sec positioning

An outline of the process executed in the playback operation of the operation program containing these operation command statements is shown in the flowchart of Fig. 14. First, the operation command 1 is read at step VI. In accordance with the ordinary method, a path motion plan for linearly moving the robot hand at the command speed of 2000 mm/sec to position it at the position TP4 is prepared. Based on the prepared path motion plan, interpolation points are prepared by the interpolation function, and the prepared interpolation points are transferred to the servo circuit 28 for every processing cycle, thereby moving the robot hand to the position TP4 (step V2) .

At the next step V3, the operation command 2 is read. Further, a path motion plan for linearly moving the hand robot to the position TP5 is prepared in accordance with the ordinary method and transferred to the servo circuit 28 for every processing cycle, thereby starting the movement toward position TP5 (step V4). The robot hand completes the acceleration and can start the operation in accordance with the next operation command 3 at time point J. The position on the path corresponding to this point J is given as P3. In this case, the position P3 is assumed to be located before position TP5, and the distance between P3 and TP5 corresponds to the area of the portion surrounded by the points JJ'KL in Fig. 4A. When the process for the motion for moving from the position TP5 toward the position TP6 is allowed to start, the next operation command 3 is read (step V5), the process for preparing a path motion plan is started, and the time constant of acceleration/deceleration (inclination of the straight lines MN and OP) is calculated (step V6). The operation command 3 designates the path-assurance section as an intermediate range of 10 mm between the position TP5 and the position TP6 (the range of 5 mm before and after the intermediate point) and, therefore, a point M is calculated such that the area (representing the distance) of the portion surrounded by the points WXαβ in the time chart of Fig. 9 is 5 mm to thereby determine the path motion plan from TP5 to TP6 (step V7). The points α and β represent an intermediate point between the point N and the point O and an intermediate point between the point M and the point P, respectively, on the path MNOP shown in Fig. 9. The point M is calculated using the values of the command speed and the time constant. In the process, a point Y (point Z) is calculated such that the area (representing the distance) of the portion surrounded by the points αβYZ is 5 mm. As a result, the area (representing the distance) of the portion surrounded by the points WXYZ is 10 mm and the designated path-assurance section is obtained. When the point M in the time chart of Fig. 9 is reached (or in the immediately preceding processing cycle), the interpolation process is executed based on the determined path motion plan (MNOP), and the preparation of interpolation points for individual axes and the transfer of the prepared interpolation points to the servo circuit 28 are started (steps V8 and V9).

Then, the movement path of the robot hand starts to deviate from the straight teaching path extending from TP4 to TP5, and the robot hand moves along a curved path indicated by numeral 10 in Fig. 8. When a position on the path where the robot hand starts to deviate from the teaching path is given as P4, the position P4 is assumed to be located between the position P3 and the position TP5, and the distance between P4 and TP5 corresponds to the area of the portion surrounded by the points MM'KL in Fig. 9. When the time point indicated by the point L in the time chart of Fig. 9 is reached, the motion for moving along the path from TP4 to TP5 is completed. The position of the robot hand (the point P5 in Fig. 3) on the path at this time is located 5 mm upstream of the intermediate point between the position TP5 and the position TP6 along the straight path connecting TP5 and TP6. This is by reason of the fact that such a path motion plan is prepared at step V7.

The robot hand moves linearly from the point P5 along the straight teaching path connecting TP5 and TP6.

When the process for the motion for moving from the position TP6 to the position TP7 is allowed to start, the operation command 4 is read (step V10) and a path motion plan (QRST) from the position TP6 to the position TP7 is prepared in accordance with the ordinary method. In the process, the path motion plan is determined assuming that the point Q and the point Y (point 2) coincide with each other (step V11).

When the point Y (point Z) in the time chart of Fig. 9 is reached (or in the immediately preceding processing cycle), an interpolation process is executed based on the determined path motion plan (QRST), and the preparation of interpolation points for individual axes and the transfer of the prepared interpolation points to the servo circuit 28 are started (steps V12 and V13). Then, the movement path of the robot hand starts to deviate from the straight teaching path extending from TP5 to TP6, and the robot hand moves along a curved path indicated by numeral 11. When a position on the path where the robot hand starts to deviate from the teaching path is given as P6, the position P6 is assumed to be located 10 mm distant from the position P5 between the position P5 and the position TP6. Thereafter, when the robot hand completes the motion for moving along the path from the position TP6 to the position TP7 and reaches the terminal point TP7 (step V14), the process is completed. In this way, the movement of the robot hand is achieved to realize the path assurance designated by the operation command 3 in the fourth example of the operation command statement.

### [Fifth example of operation command statement]

1: straight position [TP4] 2000 mm/sec positioning
2: straight position [TP5] 2000 mm/sec 100% smooth
3: straight position [TP6] 2000 mm/sec path assurance center 10 msec
4: straight position [TP7] 2000 mm/sec positioning

An outline of the process executed in the playback operation of the operation program containing these operation command statements is shown in the flowchart of Fig. 15. First, the operation command 1 is read at step W1. In accordance with the ordinary method, a path motion plan for linearly moving the robot hand at the command speed of 2000 mm/sec to position it at the position TP4 is prepared. Based on the prepared path motion plan, interpolation points are prepared by the interpolation function, and the prepared interpolation points are transferred to the servo circuit 28 for every processing cycle, thereby moving the robot hand to the position TP4 (step W2).

At the next step W3, the operation command 2 is read. Further, in accordance with the ordinary method, a path motion plan for linearly moving the robot hand to the position TP5 is prepared. Based on the prepared path motion plan, interpolation points are prepared by the interpolation function and transferred to the servo circuit 28 for every processing cycle, thereby starting the movement toward the position TP5 (step W4). The robot hand completes the acceleration and can start the operation in accordance with the next operation command 3 at time point J. The position on the path corresponding to this point J is given as P3, as in the fourth example of the operation command statement. In this case, the position P3 is assumed to be located before position TP5, and the distance between P3 and TP5 corresponds to the area of the portion surrounded by the points JJ'KL in Fig. 4A. When the process for the motion for moving from the position TP5 toward the position TP6 is allowed to start, the next operation command 3 is read (step W5), the process for preparing a path motion plan is started, and the time constant of acceleration/deceleration (inclination of the straight lines MN and OP) is calculated (step W6). The operation command 3 designates the path-assurance section as an intermediate range of 10 msec between the position TP5 and the position TP6 (the range of 5 msec before and after the intermediate point) and, therefore, a point M is calculated such that the time represented by Wβ in the time chart of Fig. 9 is 5 msec to thereby determine the path motion plan from TP5 to TP6 (step W7). The points α and β represent an intermediate point between the point N and the point O and an intermediate point between the point M and the point P, respectively, on the path MNOP shown in Fig. 9. The point M is calculated using the values of the command speed and the time constant. In the process, a point Y (point Z) is calculated such that the time represented by βZ is 5 msec. As a result, the time represented by WZ is 10 msec and the designated path-assurance section is obtained. When the point M in the time chart of Fig. 9 is reached (or in the immediately preceding processing cycle), the interpolation process is executed based on the determined path motion plan (MNOP), and the preparation of interpolation points for individual axes and the transfer of the prepared interpolation points to the servo circuit 28 are started (steps W8 and W9).

Then, the movement path of the robot hand starts to deviate from the straight teaching path extending from TP4 to TP5, and the robot hand moves along a curved path indicated by numeral 10 in Fig. 8. When a position on the path where the robot hand starts to deviate from the teaching path is given as P4, the position P4 is assumed to be located between the position P3 and the position TP5, and the distance between P4 and TP5 corresponds to the area of the portion surrounded by the points MM'KL in Fig. 9. When the time point indicated by the point L in the time chart of Fig. 9 is reached, the motion for moving along the path from TP4 to TP5 is completed. The position of the robot hand (the point P5 in Fig. 8) on the path at this time is located upstream of the intermediate point between the position TP5 and the position TP6 along the straight path connecting TP5 and TP6 by the distance corresponding to the area of the portion surrounded by the points WXαβ in Fig. 9.

The robot hand moves linearly from the point P5 along the straight teaching path connecting TP5 and TP6.

When the process for the motion for moving from the position TP6 to the position TP7 is allowed to start, the operation command 4 is read (step W10) and a path motion plan (QRST) from the position TP6 to the position TP7 is prepared in accordance with the ordinary method. In the process, the path motion plan is determined assuming that the point Q and the point Y (point Z) coincide with each other (step W11).

When the point Y (point Z) in the time chart of Fig. 9 is reached (or in the immediately preceding processing cycle), an interpolation process is executed based on the determined path motion plan (QRST), and the preparation of interpolation points for individual axes and the transfer of the prepared interpolation points to the servo circuit 28 are started (steps W12 and W13). Then, the movement path of the robot hand starts to deviate from the straight teaching path extending from TP5 to TP6, and the robot hand moves along a curved path indicated by numeral 11. When a position on the path where the robot hand starts to deviate from the teaching path is given as P6, the position P6 is assumed to be located between the position P5 and the position TP6, and the distance between P5 and P6 corresponds to the area of the portion surrounded by the points WXYZ. Thereafter, when the robot hand completes the motion for moving along the path from the position TP6 to the position TP7 and reaches the terminal point TP7 (step W14), the process is completed. In this way, the movement of the robot hand is achieved to realize the path assurance designated by the motion command 3 in the fifth example of the operation command statement.

### [Sixth example of operation command statement]

1: straight position [TP4] 2000 mm/sec position
2: straight position [TP5] 2000 mm/sec 100% smooth
3: straight position [TP6] 2000 mm/sec path assurance center 10%
4: straight position [TP7] 2000 mm/sec positioning

An outline of the process executed in the playback operation of the operation program containing these operation command statements is shown in the flowchart of Fig. 16. First, the operation command 1 is read at step X1. In accordance with the ordinary method, a path motion plan for linear moving the robot hand at the command speed of 2000 mm/sec to position it at the position TP4 is prepared. Based on the prepared path motion plan, interpolation points are prepared by the interpolation function, and the prepared interpolation points are transferred to the servo circuit 28 for every processing cycle, thereby moving the robot hand to the position TP4 (step X2).

At the next step X3, the operation command 2 is read. Further, in accordance with the ordinary method, a path motion plan for linearly moving the robot hand to the position TP5 is prepared. Based on the prepared path motion plan, interpolation points are prepared by the interpolation function and transferred to the servo circuit 28 for every processing cycle, thereby starting the movement toward the position TP5 (step X4). The robot hand completes the acceleration and can start the operation in accordance with the next operation command 3 at time point J. The position on the path corresponding to this point J is given as P3, as in the fourth example of the operation command statement. In this case, the position P3 is assumed to be located before the position TP5, and the distance between P3 and TP5 corresponds to the area of the portion surrounded by the points JJ'KL in Fig. 4A. When the process for the motion for moving from the position TP5 toward the position TP6 is allowed to start, the next operation command 3 is read (step X5), the process for preparing a path motion plan is started, and the time constant of acceleration/deceleration (inclination of the straight lines MN and OP) is calculated (step X6). The operation command 3 designates the path-assurance section as an intermediate range of 10% of the distance between the position TP5 and the position TP6 (the range of 5% of the distance between the position TP5 and the position TP6 before and after the intermediate point) and, therefore, a point M is calculated such that the area of the portion surrounded by the points WXαβ in the time chart of Fig. 9 is 5% of the area of the portion surrounded by the points MNOP to thereby determine the path motion plan from TP5 to TP6 (step X7). The points α and β represent an intermediate point between the point N and the point O and an intermediate point between the point M and the point P, respectively, on the path MNOP shown in Fig. 9. The point M is calculated using the values of the command speed and the time constant. In the process, a point Y (point Z) is calculated such that the area of the portion surrounded by the points αβYZ is 5% of the area of the portion surrounded by the points MNOP. As a result, the area of the portion surrounded by the points WXYZ is 10% of the area of the portion surrounded by the points MNOP and the designated path-assurance section is obtained. When the point M in the time chart of Fig. 9 is reached (or in the immediately preceding processing cycle), the interpolation process is executed based on the determined path motion plan (MNOP), and the preparation of interpolation points for individual axes and the transfer of the prepared interpolation points to the servo circuit 28 are started (steps X8 and X9).

Then, the movement path of the robot hand starts to deviate from the straight teaching path extending from TP4 to TP5, and the robot hand moves along a curved path indicated by numeral 10 in Fig. 8. When a position on the path where the robot hand starts to deviate from the teaching path is given as P4, the position P4 is assumed to be located between the position P3 and the position TP5, and the distance between P4 and TP5 corresponds to the area of the portion surrounded by the points MM'KL in Fig. 9. When the time point indicated by point L in the time chart of Fig. 9 is reached, the motion for moving along the path from TP4 to TP5 is completed. The position of the robot hand (the point P5 in Fig. 8) on the path at this time is located upstream of the intermediate point between the position TP5 and the position TP6 by 5% of the distance of the straight path section between TP5 and TP6. This is because such a path motion plan is prepared at step X7.

The robot hand moves linearly from point P5 along the straight teaching path connecting TP5 and TP6.

When the process for the motion for moving from the position TP6 to the position TP7 is allowed to start, the operation command 4 is read (step X10) and a path motion plan (QRST) from the position TP6 to the position TP7 is prepared in accordance with the ordinary method. In the process, the path motion plan is determined assuming that the point Q and the point Y (point Z) coincide with each other (step X11).

When the point Y (point Z) in the time chart of Fig. 9 is reached (or in the immediately preceding processing cycle), an interpolation process is executed based on the determined path motion plan (QRST), and the preparation of interpolation points for individual axes and the transfer of the prepared interpolation points to the servo circuit 28 are started (steps X12 and X13). Then, the movement path of the robot hand starts to deviate from the straight teaching path extending from TP5 to TP6, and the robot hand moves along a curved path indicated by numeral 11. When a position on the path where the robot hand starts to deviate from the teaching path is given as P6, the position P6 is assumed to be located between the position P5 and the position TP6 and the distance between P5 and P6 corresponds to 10% of the distance of the straight path section between the position TP5 and the position TP6. Thereafter, when the robot hand completes the motion for moving along the path from the position TP6 to the position TP7 and reaches the terminal point TP7 (step X14), the process is completed. In this way, the movement of the robot hand is achieved to realize the path assurance designated by the operation command 3 in the sixth example of the operation command statement.

Although the present invention has been described with reference to the embodiments shown in the accompanying drawings, these embodiments are only illustrative and are not limitative. Accordingly, the scope of the present invention is limited only by the appended claims, and the embodiments of the present invention may be modified or changed without departing from the scope of the claims.

## Claims

1. A robot movement control method in which a robot is smoothly transferred from movement in a preceding path section to movement in a succeeding path section without an abrupt direction change by starting a motion for moving said robot along a teaching path for the succeeding path section before completion of a motion for moving said robot along a teaching path for the preceding path section so as to carry out the motion for movement along the teaching path in the preceding path section and the motion for movement along the teaching path in the succeeding path section with an overlap, said method **characterized by** comprising the steps of:
determining a motion for moving said robot along a teaching path from a designated starting point to a designated terminal point with respect to each of two continuous path sections including a preceding path section and a succeeding path section;
designating a path-assurance section from the designated starting point to a designated route point on the teaching path for the preceding path section;
preparing a path motion plan so that, after said robot is moved along the teaching path for the preceding path section in the path-assurance section and reaches the route point, the motion for moving said robot along the teaching path for the succeeding path section is started with an overlap on the motion for moving said robot along the teaching path for the preceding path section; and
moving said robot from the starting point of the preceding path section to the terminal point of the succeeding path section in accordance with the prepared path motion plan.

2. A robot movement control method in which a robot is smoothly transferred from movement in a preceding path section to movement in a succeeding path section without an abrupt direction change by starting a motion for moving said robot along a teaching path for the succeeding path section before completion of a motion for moving said robot along a teaching path for the preceding path section so as to carry out the motion for movement along the teaching path in the preceding path section and the motion for movement along the teaching path in the succeeding path section with an overlap, said method **characterized by** comprising the steps of:
determining a motion for moving said robot along the teaching path from a designated starting point to a designated terminal point with respect to each of three continuous path sections including a first path section, a second path section following the first path section and a third path section following the second path section;
designating a path-assurance section from a first intermediate point to a second intermediate point on the teaching path for the second path section;
preparing a path motion plan so that the motion for moving said robot along the teaching path for the first path section is completed before said robot reaches the first intermediate point and so that, after said robot is moved along the teaching path for the second path section in the path-assurance section and reaches the second intermediate point, the motion for moving said robot along the teaching path for the third path section is started with overlap on the motion for moving said robot along the teaching path for the second path section; and
moving said robot from the starting point of the first path section to the terminal point of the third path section in accordance with the prepared path motion plan.

3. The robot movement control method according to claim 1 or 2, wherein a spatial length of the path-assurance section is designated.

4. The robot movement control method according to claim 1 or 2, further comprising the step of designating a ratio of the path-assurance section to the teaching path for the path section including the path-assurance section.

5. The robot movement control method according to claim 1 or 2, further comprising the step of designating the time required for said robot to move through the path-assurance section.
